# EUROPEAN PATENT APPLICATION

(11) **EP 3 716 473 A1**
(43) Date of publication of application: **30.09.2020**
(21) Application number: 18880392.8
(22) Date of filing: 22.10.2018
(51) Int. Cl.: H02S 40/34, H02G 3/04, H02G 3/30, H02S 20/10, H02S 20/32

(54) **CONCENTRATING SOLAR POWER GENERATION DEVICE**

(30) Priority: 24.11.2017 JP 2017225981
(71) Applicant: Sumitomo Electric Industries, Ltd., Osaka-shi, Osaka 541-0041 (JP)
(72) Inventor: IMAI, Ryusuke, Osaka-shi, Osaka 541-0041 (JP); KONAKA, Hiroyuki, Osaka-shi, Osaka 541-0041 (JP)
(74) Representative: Boult Wade Tennant LLP
(86) International application number: PCT/JP2018/039138
(87) International publication number: WO 2019/102760

(57) **Abstract**

A concentrator photovoltaic apparatus (100) includes a concentrator photovoltaic panel (40) and a power-purpose wire harness (10). The power-purpose wire harness (10) is connected to the concentrator photovoltaic panel (40). The power-purpose wire harness (10) includes a plurality of power cables through which electric power generated by the concentrator photovoltaic panel (40) can be taken out and a power-purpose insulating tube that ties the plurality of power cables in bundle.

## Description

### TECHNICAL FIELD

The present disclosure relates to a concentrator photovoltaic apparatus. The present application claims priority to Japanese Patent Application No. 2017-225981 filed on November 24, 2017, contents of which are incorporated by reference herein in their entirety.

### BACKGROUND ART

Japanese Patent Laying-Open No. 11-81542 (PTL 1) describes a cable wiring structure of a photovoltaic system arranged on a roof. In the photovoltaic system, electric power generated by a photovoltaic module is sent to an indoor inverter through a cable.

### CITATION LIST

### PATENT LITERATURE

PTL 1: Japanese Patent Laying-Open No. 11-81542

### SUMMARY OF INVENTION

A concentrator photovoltaic apparatus according to one manner of the present disclosure includes a concentrator photovoltaic panel and a power-purpose wire harness. The power-purpose wire harness is connected to the concentrator photovoltaic panel. The power-purpose wire harness includes a plurality of power cables through which electric power generated by the concentrator photovoltaic panel can be taken out and a power-purpose insulating tube that ties the plurality of power cables in bundle.

### BRIEF DESCRIPTION OF DRAWINGS

Fig. 1 is a schematic front view showing a construction of a concentrator photovoltaic apparatus according to the present embodiment.
Fig. 2 is a schematic front view showing a construction of a power-purpose wire harness of the concentrator photovoltaic apparatus according to the present embodiment.
Fig. 3 is a schematic cross-sectional view along the line III-III in Fig. 2.
Fig. 4 is a schematic diagram showing a construction of an end of a power-purpose insulating tube of the concentrator photovoltaic apparatus according to the present embodiment.
Fig. 5 is a schematic front view showing a construction of a control-purpose wire harness of the concentrator photovoltaic apparatus according to the present embodiment.
Fig. 6 is a partial schematic cross-sectional view showing a construction of a power-cable-side connector and a connection-box-side connector of the concentrator photovoltaic apparatus according to the present embodiment.
Fig. 7 is a partial schematic cross-sectional view showing a construction of a control-cable-side connector and a control-box-side connector of the concentrator photovoltaic apparatus according to the present embodiment.
Fig. 8 is a schematic top view showing a first state of the concentrator photovoltaic apparatus according to the present embodiment.
Fig. 9 is a schematic side view showing a second state of the concentrator photovoltaic apparatus according to the present embodiment.

### DETAILED DESCRIPTION

### [Problem to be Solved by the Present Disclosure]

With increase in amount of power generation by a photovoltaic system, it may become difficult to secure sufficient insulation performance with a conventional power cable and reliability of the power cable may become lower. In connecting a power cable, at a site of installation of the photovoltaic system, insulation of the power cable should be stripped off to expose a metal line and the metal line should manually be connected. A concentrator photovoltaic apparatus, however, is often installed in a desert large in amount of solar radiation. In a severe environment such as the desert, efficiency in works for attachment of the power cable is significantly low.

One manner of the present disclosure was made to solve a problem as above, and an object thereof is to provide a concentrator photovoltaic apparatus capable of achieving improved insulation performance of a power cable while efficiency in works for attachment of the power cable is improved.

### [Advantageous Effect of the Present Disclosure]

According to one manner of the present disclosure, a concentrator photovoltaic apparatus capable of achieving improved insulation performance of a power cable while efficiency in works for attachment of the power cable is improved can be provided.

### [Description of Embodiment of the Present Disclosure]

Overview of an embodiment of the present disclosure will initially be described.
(1) A concentrator photovoltaic apparatus 100 according to one manner of the present disclosure includes a concentrator photovoltaic panel 40 and a power-purpose wire harness 10. Power-purpose wire harness 10 is connected to concentrator photovoltaic panel 40. Power-purpose wire harness 10 includes a plurality of power cables 72 through which electric power generated by concentrator photovoltaic panel 40 can be taken out and a power-purpose insulating tube 71 that ties the plurality of power cables 72 in bundle. By tying power cables 72 in bundle by using power-purpose insulating tube 71, insulation performance of power cable 72 can be enhanced. Consequently, reliability of power cable 72 can be improved. By tying the plurality of power cables 72 in bundle by using power-purpose insulating tube 71 to make a harness, efficiency in works for attachment of power cable 72 can be improved.
(2) Concentrator photovoltaic apparatus 100 according to (1) may further include a driving unit 30 that drives concentrator photovoltaic panel 40 and a control-purpose wire harness 20 connected to driving unit 30. Control-purpose wire harness 20 may include a plurality of control cables 73 connected to driving unit 30 and a control-purpose insulating tube 29 that ties the plurality of control cables 73 in bundle. A voltage applied to each of the plurality of power cables 72 may be higher than a voltage applied to each of the plurality of control cables 73. By tying the plurality of control cables 73 in bundle by using control-purpose insulating tube 29 to make a harness, efficiency in works for attachment of the control cable can be improved. Furthermore, a power supply different in type can be separated.
(3) Concentrator photovoltaic apparatus 100 according to (2) may further include a pedestal 1 that supports driving unit 30. Each of power-purpose wire harness 10 and control-purpose wire harness 20 may be provided along a direction of extension of pedestal 1. Thus, each of power-purpose wire harness 10 and control-purpose wire harness 20 can be prevented from interfering concentrator photovoltaic panel 40 in rotation of concentrator photovoltaic panel 40.
(4) Concentrator photovoltaic apparatus 100 according to (3) may further include a connection box 2 attached to pedestal 1. Connection box 2 may include a first connector 6. Power-purpose wire harness 10 may include a second connector 5 that can be connected to first connector 6. Efficiency in attachment of power-purpose wire harness 10 to connection box 2 can thus be improved.
(5) In concentrator photovoltaic apparatus 100 according to any one of (1) to (4), concentrator photovoltaic panel 40 may include a first panel portion 41 and a second panel portion 42 provided at a distance from each other. Power-purpose wire harness 10 may include a first-panel-portion connector 15 connected to first panel portion 41 and a second-panel-portion connector 17 connected to second panel portion 42. First-panel-portion connector 15 may be different in shape from second-panel-portion connector 17. Wrong connection of first-panel-portion connector 15 to second panel portion 42 can thus be prevented. Similarly, wrong connection of second-panel-portion connector 17 to first panel portion 41 can be prevented. Consequently, efficiency in attachment of power cable 72 can further be improved.
(6) In concentrator photovoltaic apparatus 100 according to (5), the plurality of power cables 72 may include a plurality of first power cable portions 14 connected to first panel portion 41 and a plurality of second power cable portions 16 connected to second panel portion 42. Power-purpose insulating tube 71 may include a first region 11 that surrounds both of the plurality of first power cable portions 14 and the plurality of second power cable portions 16 and a second region 12 that does not surround the plurality of first power cable portions 14 but surrounds the plurality of second power cable portions 16. The plurality of power cables 72 can thus be branched into the plurality of first power cable portions 14 connected to first panel portion 41 and the plurality of second power cable portions 16 connected to second panel portion 42.
(7) In concentrator photovoltaic apparatus 100 according to any one of (1) to (6), power-purpose insulating tube 71 may be a corrugated tube. Since the corrugated tube is high in bendability, a degree of freedom in wiring can be enhanced.
(8) In concentrator photovoltaic apparatus 100 according to any one of (1) to (7), power-purpose insulating tube 71 may be composed of a material containing nylon 12. Nylon 12 is weather resistant to ultraviolet rays. Therefore, even though concentrator photovoltaic apparatus 100 is installed at a location large in amount of solar radiation such as a desert, deterioration of power-purpose insulating tube 71 can be suppressed.

### [Details of Embodiment of the Present Disclosure]

Details of an embodiment of the present disclosure will be described below with reference to the drawings. The same or corresponding elements in the drawings below have the same reference characters allotted and description thereof will not be repeated.

A construction of concentrator photovoltaic apparatus 100 according to the present embodiment will initially be described.

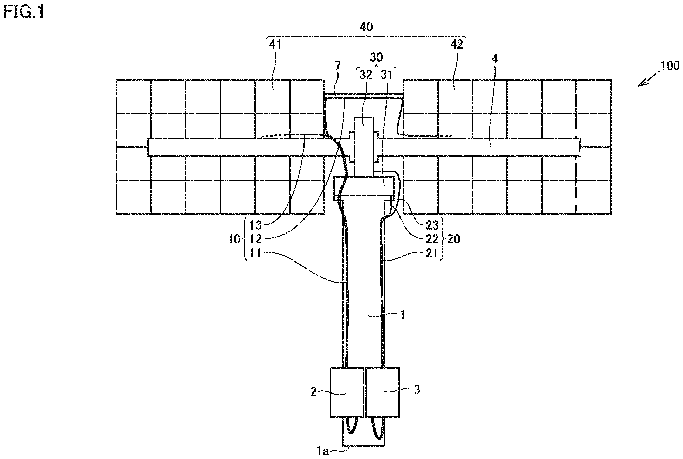

As shown in Fig. 1, concentrator photovoltaic apparatus 100 according to the present embodiment mainly includes concentrator photovoltaic panel 40, power-purpose wire harness 10, control-purpose wire harness 20, driving unit 30, pedestal 1, a shaft 4, connection box 2, and a control box 3. Concentrator photovoltaic panel 40 includes, for example, first panel portion 41 and second panel portion 42. Each of first panel portion 41 and second panel portion 42 is attached to shaft 4. First panel portion 41 and second panel portion 42 are provided at a distance from each other. Each of first panel portion 41 and second panel portion 42 includes a plurality of photovoltaic modules (not shown). Each of the plurality of photovoltaic modules has a power generation capacity, for example, of 150 watts. Concentrator photovoltaic apparatus 100 according to the present embodiment may have a total power generation capacity, for example, of 30 kilowatts or higher. Power-purpose wire harness 10 serves to take out electric power generated by concentrator photovoltaic panel 40 to the outside. Power-purpose wire harness 10 is connected to concentrator photovoltaic panel 40.

Driving unit 30 can change an orientation of concentrator photovoltaic panel 40 in any orientation. Driving unit 30 includes, for example, an azimuth driving unit 31 and an elevation driving unit 32. Pedestal 1 supports driving unit 30. Specifically, azimuth driving unit 31 is supported on pedestal 1. Azimuth driving unit 31 is arranged, for example, on pedestal 1. Elevation driving unit 32 is attached to azimuth driving unit 31. Elevation driving unit 32 is arranged, for example, on azimuth driving unit 31. Shaft 4 is attached to elevation driving unit 32. Shaft 4 can rotate as it is driven by elevation driving unit 32. Control-purpose wire harness 20 serves to control driving unit 30. Control-purpose wire harness 20 is connected to driving unit 30. Specifically, control-purpose wire harness 20 is connected to each of azimuth driving unit 31 and elevation driving unit 32.

Connection box 2 is attached, for example, to pedestal 1. Power-purpose wire harness 10 is connected to connection box 2. Control box 3 is attached, for example, to pedestal 1. Control box 3 is adjacent to connection box 2, for example, in a circumferential direction of pedestal 1. Control-purpose wire harness 20 is connected to control box 3. Pedestal 1 is, for example, in a columnar shape. Each of connection box 2 and control box 3 is attached, for example, to an outer circumferential surface of pedestal 1. Each of power-purpose wire harness 10 and control-purpose wire harness 20 is provided, for example, along a direction of extension (a longitudinal direction) of pedestal 1.

Power-purpose wire harness 10 includes a portion that extends from azimuth driving unit 31 toward connection box 2. Specifically, power-purpose wire harness 10 extends from azimuth driving unit 31 toward a bottom surface 1a of pedestal 1, is turned back between connection box 2 and bottom surface 1a, and extends toward connection box 2. Similarly, control-purpose wire harness 20 includes a portion extending from azimuth driving unit 31 toward control box 3. Specifically, control-purpose wire harness 20 extends from azimuth driving unit 31 toward bottom surface 1a of pedestal 1, is turned back between control box 3 and bottom surface 1a, and extends toward control box 3. Each of power-purpose wire harness 10 and control-purpose wire harness 20 may be attached, for example, to the outer circumferential surface of pedestal 1.

A construction of power-purpose wire harness 10 of concentrator photovoltaic apparatus 100 according to the present embodiment will now be described.

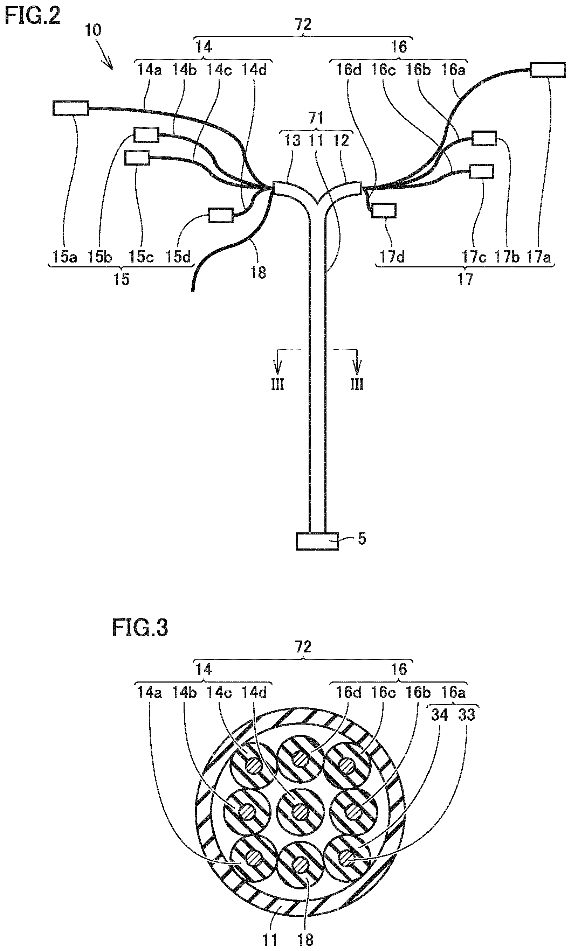

As shown in Fig. 2, power-purpose wire harness 10 includes, for example, a plurality of power cables 72 and power-purpose insulating tube 71. Electric power generated by concentrator photovoltaic panel 40 can be taken out through the plurality of power cables 72. Power-purpose insulating tube 71 ties the plurality of power cables 72 in bundle. The plurality of power cables 72 include, for example, a plurality of first power cable portions 14, a plurality of second power cable portions 16, and a grounding line 18. Each of the plurality of first power cable portions 14 is connected to first panel portion 41. Each of the plurality of second power cable portions 16 is connected to second panel portion 42.

Power-purpose insulating tube 71 includes, for example, a first region 11, a second region 12, and a third region 13. First region 11 surrounds both of the plurality of first power cable portions 14 and the plurality of second power cable portions 16. Second region 12 does not surround the plurality of first power cable portions 14 but surrounds the plurality of second power cable portions 16. Third region 13 surrounds the plurality of first power cable portions 14 but does not surround the plurality of second power cable portions 16. Each of first region 11 and third region 13 may further surround grounding line 18. A length of grounding line 18 exposed through third region 13 is, for example, 1 m.

First region 11 is branched, for example, into second region 12 and third region 13. Second region 12 is continuous to first region 11. Third region 13 is continuous to first region 11. Third region 13 may be distant from second region 12. A length in the direction of extension of first region 11 is, for example, 6 m. A length in the direction of extension of each of second region 12 and third region 13 is, for example, 1.5 m. As shown in Fig. 1, concentrator photovoltaic apparatus 100 may include a connection portion 7 that connects first panel portion 41 and second panel portion 42 to each other. Second region 12 may be arranged along connection portion 7. Second region 12 may extend from first panel portion 41 through connection portion 7 to second panel portion 42. Second region 12 may be longer in length in the direction of extension than third region 13.

As shown in Fig. 2, the plurality of first power cable portions 14 include, for example, a first positive-side power cable portion 14d, a first negative-side power cable portion 14c, a second positive-side power cable portion 14b, and a second negative-side power cable portion 14a. First positive-side power cable portion 14d exposed through third region 13 may be shorter in length than first negative-side power cable portion 14c exposed through third region 13. A length of first positive-side power cable portion 14d exposed through third region 13 is, for example, 0.1 m. A length of first negative-side power cable portion 14c exposed through third region 13 is, for example, 2 m. Second positive-side power cable portion 14b exposed through third region 13 may be shorter in length than second negative-side power cable portion 14a exposed through third region 13. A length of second positive-side power cable portion 14b exposed through third region 13 is, for example, 2 m. A length of second negative-side power cable portion 14a exposed through third region 13 is, for example, 5 m.

Power-purpose wire harness 10 includes, for example, a first-panel-portion connector 15 connected to first panel portion 41. First-panel-portion connector 15 includes a first positive-side connector portion 15d, a first negative-side connector portion 15c, a second positive-side connector portion 15b, and a second negative-side connector portion 15a. First positive-side connector portion 15d is attached to first positive-side power cable portion 14d. First negative-side connector portion 15c is attached to first negative-side power cable portion 14c. Second positive-side connector portion 15b is attached to second positive-side power cable portion 14b. Second negative-side connector portion 15a is attached to second negative-side power cable portion 14a.

As shown in Fig. 2, the plurality of second power cable portions 16 include, for example, a third positive-side power cable portion 16c, a third negative-side power cable portion 16d, a fourth positive-side power cable portion 16a, and a fourth negative-side power cable portion 16b. Third positive-side power cable portion 16c exposed through second region 12 may be longer in length than third negative-side power cable portion 16d exposed through second region 12. A length of third negative-side power cable portion 16d exposed through second region 12 is, for example, 0.1 m. A length of third positive-side power cable portion 16c exposed through second region 12 is, for example, 2 m. Fourth positive-side power cable portion 16a exposed through second region 12 may be longer in length than fourth negative-side power cable portion 16b exposed through second region 12. A length of fourth negative-side power cable portion 16b exposed through second region 12 is, for example, 2 m. A length of fourth positive-side power cable portion 16a exposed through second region 12 is, for example, 5 m.

Power-purpose wire harness 10 includes, for example, a second-panel-portion connector 17 connected to second panel portion 42. Second-panel-portion connector 17 includes a third positive-side connector portion 17c, a third negative-side connector portion 17d, a fourth positive-side connector portion 17a, and a fourth negative-side connector portion 17b. Third positive-side connector portion 17c is attached to third positive-side power cable portion 16c. Third negative-side connector portion 17d is attached to third negative-side power cable portion 16d. Fourth positive-side connector portion 17a is attached to fourth positive-side power cable portion 16a. Fourth negative-side connector portion 17b is attached to fourth negative-side power cable portion 16b.

First-panel-portion connector 15 may be different in shape from second-panel-portion connector 17. Specifically, first positive-side connector portion 15d may be different in shape from third negative-side connector portion 17d. First negative-side connector portion 15c may be different in shape from third positive-side connector portion 17c. Second positive-side connector portion 15b may be different in shape from fourth negative-side connector portion 17b. Second negative-side connector portion 15a may be different in shape from fourth positive-side connector portion 17a.

As shown in Fig. 2, power-purpose wire harness 10 includes, for example, a power-cable-side connector 5 (second connector 5). Power-cable-side connector 5 is connected to each of the plurality of power cables 72. Specifically, power-cable-side connector 5 is connected, for example, to each of first positive-side power cable portion 14d, first negative-side power cable portion 14c, second positive-side power cable portion 14b, second negative-side power cable portion 14a, third positive-side power cable portion 16c, third negative-side power cable portion 16d, fourth positive-side power cable portion 16a, fourth negative-side power cable portion 16b, and grounding line 18. Power-cable-side connector 5 is arranged outside power-purpose insulating tube 71. Each of the plurality of power cables 72 has one end connected to power-cable-side connector 5. Each of the plurality of power cables 72 may have the other end connected to first-panel-portion connector 15 or second-panel-portion connector 17 or terminated by a terminal such as a ring terminal.

As shown in Fig. 3, each of the plurality of power cables 72 includes a metal line 33 and an insulating cover 34. Insulating cover 34 covers metal line 33. Each of the plurality of power cables 72 is arranged within first region 11 of power-purpose insulating tube 71. Specifically, first positive-side power cable portion 14d, first negative-side power cable portion 14c, second positive-side power cable portion 14b, second negative-side power cable portion 14a, third positive-side power cable portion 16c, third negative-side power cable portion 16d, fourth positive-side power cable portion 16a, fourth negative-side power cable portion 16b, and grounding line 18 are arranged within first region 11. At least one of the plurality of power cables 72 may be in contact with an inner surface of power-purpose insulating tube 71. As set forth above, power-purpose wire harness 10 has a double insulation structure.

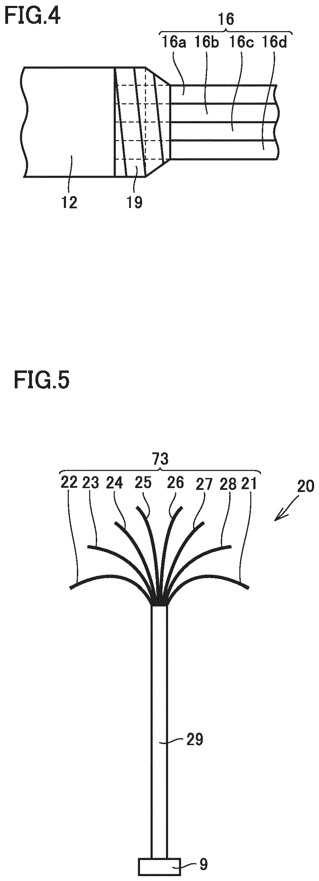

As shown in Fig. 4, power-purpose wire harness 10 may include a tape 19. Tape 19 is composed, for example, of polytetrafluoroethylene (PTFE). PTFE is weather resistant to an environment large in amount of solar radiation. Tape 19 is attached to an end in the direction of extension of power-purpose insulating tube 71. Tape 19 may be in contact with second region 12 of power-purpose insulating tube 71 and the plurality of second power cable portions 16. Tape 19 is wrapped around in a circumferential direction of second region 12. A gap between second region 12 and the plurality of second power cable portions 16 is closed by tape 19. Similarly, tape 19 may be wrapped around in a circumferential direction of third region 13 so as to be in contact with third region 13 and the plurality of first power cable portions 14. A gap between third region 13 and the plurality of first power cable portions 14 is closed by tape 19. Entry of insects into a gap between the inner surface of power-purpose insulating tube 71 and the plurality of power cables 72 can thus be suppressed.

A construction of control-purpose wire harness 20 of concentrator photovoltaic apparatus 100 according to the present embodiment will now be described.

As shown in Fig. 5, control-purpose wire harness 20 may include a plurality of control cables 73 and a control-purpose insulating tube 29. At least one of the plurality of control cables 73 is connected to driving unit 30. Control-purpose insulating tube 29 ties the plurality of control cables 73 in bundle. A voltage applied to each of the plurality of power cables 72 is higher than a voltage applied to each of the plurality of control cables 73. A voltage applied to each of the plurality of power cables 72 is set, for example, to 1000 V. A voltage applied to each of the plurality of control cables 73 is set, for example, to 12 V. Each of the plurality of control cables 73 includes metal line 33 and insulating cover 34 similarly to each of the plurality of power cables 72 (see Fig. 3).

The plurality of control cables 73 include, for example, a first control cable portion 21, a second control cable portion 22, a third control cable portion 23, a fourth control cable portion 24, a fifth control cable portion 25, a sixth control cable portion 26, a seventh control cable portion 27, and an eighth control cable portion 28. Each of first control cable portion 21, second control cable portion 22, third control cable portion 23, fourth control cable portion 24, fifth control cable portion 25, sixth control cable portion 26, seventh control cable portion 27, and eighth control cable portion 28 is surrounded by control-purpose insulating tube 29.

First control cable portion 21 is connected, for example, to a wind sensor (not shown). A length of first control cable portion 21 exposed through control-purpose insulating tube 29 is, for example, 12 m. Second control cable portion 22 is connected, for example, to a sun sensor (not shown). A length of second control cable portion 22 exposed through control-purpose insulating tube 29 is, for example, 5 m. Third control cable portion 23 is connected, for example, to azimuth driving unit 31. A length of first control cable portion 21 exposed through control-purpose insulating tube 29 is, for example, 1 m. Fourth control cable portion 24 is connected, for example, to elevation driving unit 32. A length of fourth control cable portion 24 exposed through control-purpose insulating tube 29 is, for example, 2 m.

Fifth control cable portion 25 is connected, for example, to an elevation upper limit switch (not shown). Sixth control cable portion 26 is connected, for example, to an elevation lower limit switch (not shown). Seventh control cable portion 27 is connected, for example, to an azimuth upper limit switch (not shown). Eighth control cable portion 28 is connected, for example, to an azimuth lower limit switch (not shown). Each of fifth control cable portion 25, sixth control cable portion 26, seventh control cable portion 27, and eighth control cable portion 28 has a length, for example, of 0.5 m.

As shown in Fig. 5, control-purpose wire harness 20 includes, for example, a control-cable-side connector 9. Control-cable-side connector 9 is connected to each of the plurality of control cables 73. Specifically, control-cable-side connector 9 is connected, for example, to each of first control cable portion 21, second control cable portion 22, third control cable portion 23, fourth control cable portion 24, fifth control cable portion 25, sixth control cable portion 26, seventh control cable portion 27, and eighth control cable portion 28. Control-cable-side connector 9 is arranged outside control-purpose insulating tube 29. Each of the plurality of control cables 73 has one end connected to control-cable-side connector 9. The plurality of power cables 72 have the other ends connected to a wind sensor, a sun sensor, azimuth driving unit 31, elevation driving unit 32, the elevation upper limit switch, the elevation lower limit switch, the azimuth upper limit switch, and the azimuth lower limit switch.

Each of power-purpose insulating tube 71 and control-purpose insulating tube 29 may be, for example, a corrugated tube. The corrugated tube has a surface shape like bellows. Each of power-purpose insulating tube 71 and control-purpose insulating tube 29 is composed, for example, of a material containing nylon 12. Nylon 12 is composed of polyamide resulting from ring-opening polycondensation of lauryl lactam. Nylon 12 is weather resistant to ultraviolet rays.

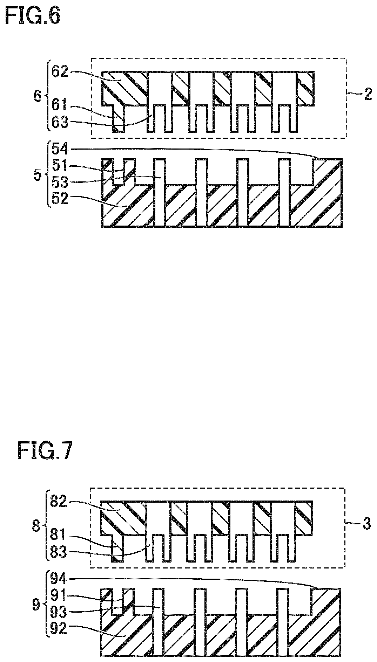

As shown in Fig. 6, connection box 2 may include a connection-box-side connector 6 (first connector 6). Connection-box-side connector 6 may include, for example, a first engagement portion 61, a first insulating support portion 62, and a first electrode 63. First insulating support portion 62 supports first electrode 63. First electrode 63 is, for example, recessed. First engagement portion 61 is provided in first insulating support portion 62. First engagement portion 61 is, for example, projecting. Connection-box-side connector 6 can be connected to power-cable-side connector 5.

As shown in Fig. 6, power-cable-side connector 5 includes, for example, a second engagement portion 51, a second insulating support portion 52, a second electrode 53, and a second projecting surface 54. Second insulating support portion 52 supports second electrode 53. Second electrode 53 is, for example, in a rod shape. Second electrode 53 is connected to the plurality of power cables 72. Second engagement portion 51 is provided in second insulating support portion 52. Second engagement portion 51 is, for example, recessed. Second engagement portion 51 can be engaged with first engagement portion 61. Second electrode 53 can be engaged with first electrode 63.

Connection-box-side connector 6 and power-cable-side connector 5 may be constructed to prevent connection between them in wrong electrode arrangement. As shown in Fig. 6, in correct electrode arrangement, each of first engagement portion 61 and second engagement portion 51 is arranged on the left in Fig. 6. In this case, first engagement portion 61 is engaged with second engagement portion 51. Similarly, first electrode 63 is engaged with second electrode 53. In wrong electrode arrangement, first engagement portion 61 is arranged on the right in Fig. 6 and second engagement portion 51 is arranged on the left in Fig. 6. When an attempt to attach power-cable-side connector 5 to connection-box-side connector 6 is made in this case, first engagement portion 61 abuts on second projecting surface 54 of second insulating support portion 52 so that first electrode 63 is prevented from being engaged with second electrode 53. The construction of connection-box-side connector 6 and power-cable-side connector 5 shown in Fig. 6 is merely by way of example. Connection-box-side connector 6 and power-cable-side connector 5 according to the present embodiment are not limited to the construction shown in Fig. 6.

As shown in Fig. 7, control box 3 may include a control-box-side connector 8. Control-box-side connector 8 includes, for example, a third engagement portion 81, a third insulating support portion 82, and a third electrode 83. Third insulating support portion 82 supports third electrode 83. Third electrode 83 is, for example, recessed. Third engagement portion 81 is provided in third insulating support portion 82. Third engagement portion 81 is, for example, projecting. Control-box-side connector 8 can be connected to control-cable-side connector 9.

As shown in Fig. 7, control-cable-side connector 9 includes, for example, a fourth engagement portion 91, a fourth insulating support portion 92, a fourth electrode 93, and a fourth projecting surface 94. Fourth insulating support portion 92 supports fourth electrode 93. Fourth electrode 93 is, for example, in a rod shape. Fourth electrode 93 is connected to the plurality of control cables 73. Fourth engagement portion 91 is provided in fourth insulating support portion 92. Fourth engagement portion 91 is, for example, recessed. Fourth engagement portion 91 can be engaged with third engagement portion 81. Fourth electrode 93 can be engaged with third electrode 83.

Control-box-side connector 8 and control-cable-side connector 9 may be constructed to prevent connection between them in wrong electrode arrangement. As shown in Fig. 7, in correct electrode arrangement, each of third engagement portion 81 and fourth engagement portion 91 is arranged on the left. In this case, third engagement portion 81 is engaged with fourth engagement portion 91. Similarly, third electrode 83 is engaged with fourth electrode 92. In wrong electrode arrangement, third engagement portion 81 is arranged on the right in Fig. 7 and fourth engagement portion 91 is arranged on the left in Fig. 6. When an attempt to attach control-cable-side connector 9 to control-box-side connector 8 is made in this case, third engagement portion 81 abuts on fourth projecting surface 94 of fourth insulating support portion 92 so that engagement of third electrode 83 with fourth electrode 93 is prevented. The construction of control-box-side connector 8 and control-cable-side connector 9 shown in Fig. 7 is merely by way of example. Control-box-side connector 8 and control-cable-side connector 9 according to the present embodiment are not limited to the construction shown in Fig. 7.

An operation of concentrator photovoltaic apparatus 100 according to the present embodiment will now be described.

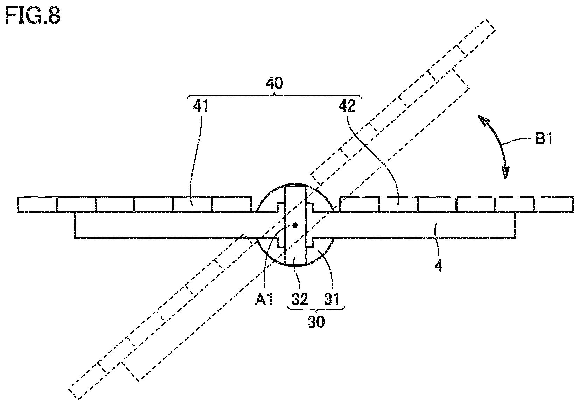

Concentrator photovoltaic panel 40 is constructed, for example, to be rotatable around two axes. Specifically, as shown in Fig. 8, concentrator photovoltaic panel 40 is constructed to be rotatable around a first rotation axis A1 along the direction of extension of pedestal 1. Specifically, azimuth driving unit 31 rotates around first rotation axis A1 upon receiving a command from control box 3 through third control cable portion 23. Elevation driving unit 32 arranged on azimuth driving unit 31 thus rotates around first rotation axis A1 together with shaft 4. Therefore, concentrator photovoltaic panel 40 attached to shaft 4 rotates around first rotation axis A1. Concentrator photovoltaic panel 40 thus rotates in an azimuth direction B1.

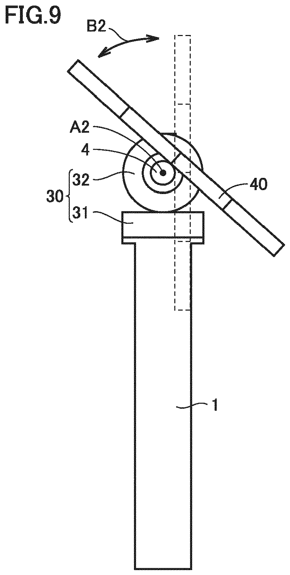

As shown in Fig. 9, concentrator photovoltaic panel 40 is constructed to be rotatable around a second rotation axis A2 along the direction of extension of shaft 4. Second rotation axis A2 is orthogonal to first rotation axis A1. Specifically, elevation driving unit 32 rotates around second rotation axis A2 upon receiving a command from control box 3 through fourth control cable portion 24. Shaft 4 attached to elevation driving unit 32 thus rotates around second rotation axis A2. Therefore, concentrator photovoltaic panel 40 attached to shaft 4 rotates around second rotation axis A2. Concentrator photovoltaic panel 40 thus rotates in an elevation direction B2. Concentrator photovoltaic panel 40 can track movement of the sun, for example, by using a sun sensor. Specifically, concentrator photovoltaic panel 40 is movable with movement of the sun so as to maintain an angle at which the panel faces the sun.

A method of wiring in concentrator photovoltaic apparatus 100 according to the present embodiment will now be described.

Initially, power-purpose wire harness 10 and control-purpose wire harness 20 are prepared. Specifically, power-purpose wire harness 10 is prepared by tying the plurality of power cables 72 in bundle by using power-purpose insulating tube 71. Similarly, control-purpose wire harness 20 is prepared by tying the plurality of control cables 73 in bundle by using control-purpose insulating tube 29. Each of power-purpose wire harness 10 and control-purpose wire harness 20 is prepared, for example, in advance in factories, rather than being prepared at a site of installation of concentrator photovoltaic apparatus 100.

Then, power-purpose wire harness 10 is attached to concentrator photovoltaic panel 40. Specifically, first-panel-portion connector 15 of power-purpose wire harness 10 is connected to first panel portion 41 of concentrator photovoltaic panel 40. Similarly, second-panel-portion connector 17 of power-purpose wire harness 10 is connected to second panel portion 42 of concentrator photovoltaic panel 40. Control-purpose wire harness 20 is attached to driving unit 30. Specifically, third control cable portion 23 of control-purpose wire harness 20 is connected, for example, to an azimuth control motor. Similarly, fourth control cable portion 24 of control-purpose wire harness 20 is connected, for example, to an elevation control motor. Other control cables are each connected to a prescribed sensor or switch.

Then, power-purpose wire harness 10 is attached to connection box 2. Specifically, power-cable-side connector 5 of power-purpose wire harness 10 is connected to connection-box-side connector 6 of connection box 2. Similarly, control-purpose wire harness 20 is attached to control box 3. Specifically, control-cable-side connector 9 of control-purpose wire harness 20 is connected to control-box-side connector 8 of control box 3. As set forth above, works for wiring the plurality of power cables 72 and the plurality of control cables 73 are completed.

In wiring of cables at a site, cables and cable supplementary materials are always sufficiently procured. Therefore, there may be excessive cables and cable supplementary materials left after completion of wiring works. Quality of wiring works may be varied due to variation in skills of workers of a constructor at the site. Significant increase in number of cables due to a larger scale of facilities leads to complicated wiring works. In this case, time required for wiring works significantly increases and wrong wiring is also highly likely. By preparing the plurality of power cables 72 and the plurality of control cables 73 as harnesses as above, cost for components can be reduced. Furthermore, variation in quality of wiring works can be lessened. In addition, time for wiring works can significantly be reduced. Moreover, possibility of wrong wiring can be lessened. By additionally providing an identification indication at the end of each cable, possibility of wrong wiring can further be lowered.

Functions and effects of concentrator photovoltaic apparatus 100 according to the present embodiment will now be described.

In concentrator photovoltaic apparatus 100 according to the present embodiment, power-purpose wire harness 10 includes a plurality of power cables 72 through which electric power generated by concentrator photovoltaic panel 40 can be taken out and power-purpose insulating tube 71 that ties the plurality of power cables 72 in bundle. By tying power cables 72 in bundle by using power-purpose insulating tube 71, insulation performance of power cable 72 can be enhanced. Consequently, reliability of power cable 72 can be improved. By tying the plurality of power cables 72 in bundle by using power-purpose insulating tube 71 to make a harness, efficiency in works for attachment of power cable 72 can be improved.

Concentrator photovoltaic apparatus 100 according to the present embodiment further includes driving unit 30 that drives concentrator photovoltaic panel 40 and control-purpose wire harness 20 connected to driving unit 30. Control-purpose wire harness 20 includes a plurality of control cables 73 connected to driving unit 30 and control-purpose insulating tube 29 that ties the plurality of control cables 73 in bundle. A voltage applied to each of the plurality of power cables 72 is higher than a voltage applied to each of the plurality of control cables 73. By tying the plurality of control cables 73 in bundle by using control-purpose insulating tube 29 to make a harness, efficiency in works for attachment of the control cable can be improved. Furthermore, a power supply different in type can be separated.

Concentrator photovoltaic apparatus 100 according to the present embodiment further includes pedestal 1 that supports driving unit 30. Each of power-purpose wire harness 10 and control-purpose wire harness 20 is provided along the direction of extension of pedestal 1. Thus, each of power-purpose wire harness 10 and control-purpose wire harness 20 can be prevented from interfering the concentrator photovoltaic panel in rotation of the concentrator photovoltaic panel.

Concentrator photovoltaic apparatus 100 according to the present embodiment further includes connection box 2 attached to pedestal 1. Connection box 2 includes first connector 6. Power-purpose wire harness 10 includes second connector 5 that can be connected to first connector 6. Efficiency in attachment of power-purpose wire harness 10 to connection box 2 can thus be improved.

In concentrator photovoltaic apparatus 100 according to the present embodiment, the plurality of power cables 72 include a plurality of first power cable portions 14 connected to first panel portion 41 and a plurality of second power cable portions 16 connected to second panel portion 42. Power-purpose insulating tube 71 includes first region 11 that surrounds both of the plurality of first power cable portions 14 and the plurality of second power cable portions 16 and second region 12 that does not surround the plurality of first power cable portions 14 but surrounds the plurality of second power cable portions 16. The plurality of power cables 72 can thus be branched into the plurality of first power cable portions 14 connected to first panel portion 41 and the plurality of second power cable portions 16 connected to second panel portion 42.

In concentrator photovoltaic apparatus 100 according to the present embodiment, concentrator photovoltaic panel 40 includes first panel portion 41 and second panel portion 42 provided at a distance from each other. Power-purpose wire harness 10 includes first-panel-portion connector 15 connected to first panel portion 41 and second-panel-portion connector 17 connected to second panel portion 42. First-panel-portion connector 15 is different in shape from second-panel-portion connector 17. Wrong connection of first-panel-portion connector 15 to second panel portion 42 can thus be prevented. Similarly, wrong connection of second-panel-portion connector 17 to first panel portion 41 can be prevented. Consequently, efficiency in attachment of power cable 72 can further be improved.

In concentrator photovoltaic apparatus 100 according to the present embodiment, power-purpose insulating tube 71 is a corrugated tube. Since the corrugated tube is high in bendability, a degree of freedom in wiring can be enhanced.

In concentrator photovoltaic apparatus 100 according to the present embodiment, power-purpose insulating tube 71 is composed of a material containing nylon 12. Nylon 12 is weather resistant to ultraviolet rays. Therefore, even though concentrator photovoltaic apparatus 100 is installed at a location large in amount of solar radiation such as a desert, deterioration of power-purpose insulating tube 71 can be suppressed.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 pedestal; 1a bottom surface; 2 connection box; 3 control box; 4 shaft; 5 second connector (power-cable-side connector); 6 first connector (connection-box-side connector); 7 connection portion; 8 control-box-side connector; 9 control-cable-side connector; 10 power-purpose wire harness; 11 first region; 12 second region; 13 third region; 14 first power cable portion; 14a second negative-side power cable portion; 14b second positive-side power cable portion; 14c first negative-side power cable portion; 14d first positive-side power cable portion; 15 first-panel-portion connector; 15a second negative-side connector portion; 15b second positive-side connector portion; 15c first negative-side connector portion; 15d first positive-side connector portion; 16 second power cable portion; 16a fourth positive-side power cable portion; 16b fourth negative-side power cable portion; 16c third positive-side power cable portion; 16d third negative-side power cable portion; 17 second-panel-portion connector; 17a fourth positive-side connector portion; 17b fourth negative-side connector portion; 17c third positive-side connector portion; 17d third negative-side connector portion; 18 grounding line; 19 tape; 20 control-purpose wire harness; 21 first control cable portion; 22 second control cable portion; 23 third control cable portion; 24 fourth control cable portion; 25 fifth control cable portion; 26 sixth control cable portion; 27 seventh control cable portion; 28 eighth control cable portion; 29 control-purpose insulating tube; 30 driving unit; 31 azimuth driving unit; 32 elevation driving unit; 33 metal line; 34 insulating cover; 40 concentrator photovoltaic panel; 41 first panel portion; 42 second panel portion; 51 second engagement portion; 52 second insulating support portion; 53 second electrode; 54 second projecting surface; 61 first engagement portion; 62 first insulating support portion; 63 first electrode; 71 power-purpose insulating tube; 72 power cable; 73 control cable; 81 third engagement portion; 82 third insulating support portion; 83 third electrode; 91 fourth engagement portion; 92 fourth insulating support portion; 93 fourth electrode; 94 fourth projecting surface; 100 concentrator photovoltaic apparatus; A1 first rotation axis; A2 second rotation axis; B1 azimuth direction; B2 elevation direction

## Claims

1. A concentrator photovoltaic apparatus comprising:
a concentrator photovoltaic panel; and
a power-purpose wire harness connected to the concentrator photovoltaic panel,
the power-purpose wire harness including
a plurality of power cables through which electric power generated by the concentrator photovoltaic panel can be taken out, and
a power-purpose insulating tube that ties the plurality of power cables in bundle.

2. The concentrator photovoltaic apparatus according to claim 1, further comprising:
a driving unit that drives the concentrator photovoltaic panel; and
a control-purpose wire harness connected to the driving unit, wherein
the control-purpose wire harness includes a plurality of control cables connected to the driving unit and a control-purpose insulating tube that ties the plurality of control cables in bundle, and
a voltage applied to each of the plurality of power cables is higher than a voltage applied to each of the plurality of control cables.

3. The concentrator photovoltaic apparatus according to claim 2, further comprising:
a pedestal that supports the driving unit, wherein
each of the power-purpose wire harness and the control-purpose wire harness is provided along a direction of extension of the pedestal.

4. The concentrator photovoltaic apparatus according to claim 3, further comprising:
a connection box attached to the pedestal, wherein
the connection box includes a first connector, and
the power-purpose wire harness includes a second connector that can be connected to the first connector.

5. The concentrator photovoltaic apparatus according to any one of claims 1 to 4, wherein
the concentrator photovoltaic panel includes a first panel portion and a second panel portion provided at a distance from each other,
the power-purpose wire harness includes a first-panel-portion connector connected to the first panel portion and a second-panel-portion connector connected to the second panel portion, and
the first-panel-portion connector is different in shape from the second-panel-portion connector.

6. The concentrator photovoltaic apparatus according to claim 5, wherein
the plurality of power cables include a plurality of first power cable portions connected to the first panel portion and a plurality of second power cable portions connected to the second panel portion, and
the power-purpose insulating tube includes a first region that surrounds both of the plurality of first power cable portions and the plurality of second power cable portions and a second region that does not surround the plurality of first power cable portions but surrounds the plurality of second power cable portions.

7. The concentrator photovoltaic apparatus according to any one of claims 1 to 6, wherein
the power-purpose insulating tube is a corrugated tube.

8. The concentrator photovoltaic apparatus according to any one of claims 1 to 7, wherein
the power-purpose insulating tube is composed of a material containing nylon 12.
